# EUROPÄISCHE PATENTSCHRIFT

(11) **EP 0 912 283 B1**
(45) Veröffentlichungstag und Bekanntmachung des Hinweises auf die Patenterteilung: **03.04.2002**
(21) Anmeldenummer: 97930458.1
(22) Anmeldetag: 01.07.1997
(51) Int. Cl.: B23C 3/06

(54) **HOCHGESCHWINDIGKEITSFRÄSEN**
HIGH-SPEED MILLING
FRAISAGE A GRANDE VITESSE

(30) Priorität: 02.07.1996 DE 19626608
(43) Veröffentlichungstag der Anmeldung: 06.05.1999
(73) Patentinhaber: BOEHRINGER WERKZEUGMASCHINEN GmbH, D-73033 Göppingen (DE)
(72) Erfinder: SANTORIUS, Rolf, D-73066 Uhingen (DE); SCHARPF, Paul, Dieter, D-73114 Schlat (DE); VOSS, Wolf-Dietrich, D-73087 Boll (DE); KOHLHASE, Matthias, D-78713 Schramberg (DE); KIEFER, Herbert, D-78256 Steisslingen (DE); SCHREIBER, Leo, D-73529 Schwäbisch-Gmünd (DE)
(74) Vertreter: Alber, Norbert, Dipl.-Ing.
(86) Internationale Anmeldenummer: EP9703418
(87) Internationale Veröffentlichungsnummer: WO9800261

(56) Entgegenhaltungen:
- WO-A-96/39269
- DE-A- 3 516 100
- W.BEITZ, K.-H. KÜTTNER: "Dubbel - Taschenbuch für den Maschinenbau", 1995, SPRINGER-VERLAG, BERLIN

## Beschreibung

Die Erfindung betrifft die spanende Bearbeitung von Werkstücken, insbesondere Kurbelwellen, insbesondere von Kurbelwellen für Pkw-Motoren.

Kurbelwellen sind aus verschiedenen Gründen schwierig zu bearbeiten, da sie einerseits exzentrisch liegende rotationssymmetrische Flächen aufweisen, nämlich die Mantelflächen der Hublager, und darüber hinaus bei Einspannung lediglich an ihren Enden ein in Querrichtung und Längsrichtung wenig stabiles Werkstück darstellen.

Da besonders Pkw-Kurbelwellen in sehr großen Stückzahlen hergestellt werden und einem großen Preisdruck unterliegen, steht mit Blick auf möglichst niedrige Herstellungskosten eine möglichst kurze Bearbeitungszeit mit geringer Anzahl von Arbeitsschritten bei ausreichender Bearbeitungsqualität und Maßhaltigkeit im Vordergrund.

Bisher werden Pkw-Kurbelwellen, die heute noch überwiegend aus Grauguß, z. B. GGG60 oder 70, bestehen, im ungehärteten Zustand mittels Drehen, Innenfräsen, Dreh-Drehräumen oder ähnlichen Bearbeitungsverfahren an den notwendigen Flächen, also den Mantelflächen der Lagerstellen als auch den Stirnflächen der Wangen, spanend bearbeitet, wobei Schnittgeschwindigkeiten von 100 bis 160 m/min. z. B. beim Fräsen üblich sind. Dabei weisen die Schneiden der meist als Innenrundfräser gebildeten Fräswerkzeuge eine negative Schneidengeometrie auf. Es folgten das Härten und danach Grob- und Feinschleifen.

Dabei weisen die spezifischen, zur Zeit üblichen Bearbeitungsverfahren Drehen, Dreh-Drehräumen und Innenfräsen (also Fräsen mit einem nach innen verzahnten ringförmigen Fräser, in dessen Inneren das Werkstück angeordnet ist) spezifische Vor- und Nachteile auf:

Mit dem Innenfräsen wurden vorzugsweise die Hublager der Kurbelwelle und die daran angrenzenden Wangenflächen bearbeitet. Der Vorteil besteht einerseits darin, daß dabei das Werkstück stillsteht oder nur mit geringer Drehzahl gedreht wird und der Innenfräser um den zu bearbeitenden Zapfen herumbewegt wird. Die Schnittgeschwindigkeit wird somit ausschließlich bzw. hauptsächlich durch das Werkzeug erzeugt, so daß mehrere Werkzeuge gleichzeitig und unabhängig am gleichen Werkstück arbeiten können.

Dieses Verfahren ist vor allem für große Zerspanungsleistungen pro Zeiteinheit geeignet, mit welchen jedoch auch hohe Schnittkräfte sowie hohe Werkzeug- und Spänetemperatur nachteilig einhergehen.

Besonders für labile Werkstücke wie beispielsweise Split-Pin-Kurbelwellen (bei denen zwei teilweise in radialer Richtung überlappende Hublagerzapfen axial im Vergleich zur Lagerbreite nur ganz geringfügig beabstandet sind; erforderlich für V-Motoren) ist das Innenfräsen weniger geeignet.

Unter Kostengesichtspunkten ist das Innenfräsen dem Dreh-Drehräumen vorzuziehen, da es eine kürzere Bearbeitungszeit pro Zapfen benötigt, jedoch sind beim Innenfräsen auch die Rundheitsabweichungen um ein Mehrfaches größer als beim Dreh-Drehräumen.

Die Vorteile des Dreh-Drehräumens sind somit vor allem die gute Maßhaltigkeit, insbesondere geringe Rundheitsabweichungen.

Beim Dreh-Drehräumen rotiert jedoch das Werkstück, z. B. die Kurbelwelle, im Gegensatz zum Innenfräsen, und zwar mit deutlich höherer Geschwindigkeit als das Werkzeug selbst, welches u. U. auch gar keine ganze Umdrehung, sondern nur eine Schwenkbewegung vollzieht, um die an seinem Außenumfang hintereinander angeordneten Schneiden am Werkstück in Einsatz zu bringen.

Somit wird die Schnittgeschwindigkeit primär durch die Drehung des Werkstückes erzeugt, was den Nachteil ergibt, daß bei bestimmten einzuhaltenden Schnittgeschwindigkeiten nicht mehrere Werkzeugeinheiten unabhängig voneinander am Werkstück arbeiten können, sondern nur an einander entsprechenden Teilen des Werkstückes, also beispielsweise an mehreren Mittellagern oder an den in gleicher Winkellage angeordneten zwei Hublagern einer Kurbelwelle für einen 4-Zylinder-Reihenmotor.

Aus diesem Grund hat sich die Dreh-Drehräumbearbeitung vor allem bei der Bearbeitung der Mittellager durchgesetzt.

Es ist die Aufgabe gemäß der vorliegenden Erfindung, ein spanendes Bearbeitungsverfahren insbesondere für Kurbelwellen zu schaffen, welches eine kurze Bearbeitungszeit und dennoch hohe Bearbeitungsqualität und damit geringe Herstellungskosten der Kurbelwelle ermöglichen.

Dabei konkurrieren die beiden Parameter Spandicke und Schnittgeschwindigkeit:

Aus Gründen einer möglichst niedrigen Einleitung von Schnittkräften in das Werkstück, um dessen Auslenkung gering zu halten, werden geringe Spandicken angestrebt. Dies erhöht jedoch die Bearbeitungszeit und kann nur durch Erhöhung der Schnittgeschwindigkeit ausgeglichen werden. Zusätzlich beeinflußt die Schnittgeschwindigkeit häufig die Lebensdauer, also Gesamtzerspanungsleistung des Schneidmittels, so daß auch auf dieser Seite zusätzliche Randbedingungen gegeben sind.

Diese Aufgabe wird durch die Merkmale des Anspruchs 1 gelöst. Vorteilhafte Ausführungsformen ergeben sich aus den Unteransprüchen.

Die kürzere Bearbeitungszeit wird erreicht, indem die Schnittgeschwindigkeiten insbesondere beim Fräsen drastisch erhöht werden und zwar für die Schruppbearbeitung auf mindestens 180 m/min., insbesondere auf 250 bis 600 m/Min., insbesondere auf 450 bis 600 m/Min., und für die Schlichtbearbeitung auf mindestens 200 m/min., insbesondere auf 300 bis 800 m/min., insbesondere auf 650 bis 800 m/min., mit besonderen Schneidstoffen wie z.B. Schneidkeramik, CBN, PKD (= Polykristalliner Diamant), Cermets (Hartmetall-Keramikmischung), auch beschichtete Cermets, z. B. mit TiAIN beschichtet, auf über 1000m /min. Diese Schnittgeschwindigkeiten werden z. B. bei einem scheibenförmigen Fräser mit 800 mm Durchmesser dadurch erreicht, daß sich das Werkzeug mit 50 - 2000, insbesondere 200 - 400 , insbesondere 200 - 250 Umdrehungen pro Minute dreht und gleichzeitig das Werkstück mit 0 - 60, insbesondere 15 - 20 Umdrehungen/Minute bei einem Hublagerzapfen z. B. 50 mm Durchmesser. Gerade bei dem Fräsen der Kurbelwelle, insbesondere durch einen großen scheibenförmigen Außenfräser, bewirkt dies, daß aufgrund der wesentlich höheren Frequenz des beim Fräsen unterbrochenen Schnittes die Krafteinleitung in das Werkstück pro Schneideneingriff verringert wird.

Unterstützt wird dies dadurch, daß anstelle der bisherigen negativen eine positive Schneidengeometrie und zum Teil neue Materialien der Schneidmittel angewandt werden. Die Schneiden sitzen dabei am scheibenförmigen Fräser entweder am Außenumfang des Fräsers und/oder an der Stirnfläche im Eckbereich zwischen Stirnfläche und Umfangsfläche des Fräsers, wodurch die Bearbeitung nicht nur der Mantelflächen der Kurbelwelle, sondern auch der verschiedenen, insbes. stirnseitigen, Wangenflächen möglich wird. Da jedoch das zu zerspanende Volumen bei der Stirnflächenbearbeitung einer Wange meist deutlich größer ist als bei der Mantelflächenbearbeitung eines Zapfens einer Kurbelwelle, werden vorzugsweise für die Wangenbearbeitung ein separater Fräser verwendet, und für die Zapfenbearbeitung ebenfalls ein separater Fräser.

Zusätzlich müssen in der Regel am Übergang zwischen der Zapfenfläche und der Wangenfläche radiale Einstiche, die sogenannten Unterstiche, vorgenommen werden.

Um dennoch mit einem Werkzeug nicht nur eine bestimmte axiale Länge eines Lagers bearbeiten zu können, sind mehrere verschiedene Schnittaufteilungen denkbar: Entweder ist für den linken Endbereich der Zapfen-Mantelfläche sowie für den rechten Endbereich jeweils ein separater Fräser vorgesehen, bei dem - an die Schneidenflächen für die Mantelfläche des Zapfens anschließend - vorspringende Schneidenteile zum Erzeugen des Unterstiches vorhanden ist.

Der Schneidenbereich für das Bearbeiten der Mantelfläche muß dabei in axialer Richtung so groß sein, daß sich diese Schneidenbereiche der beiden Fräser für die linke und rechte Hälfte eines Zapfens im Normalfall überlappen, um dadurch einen Axialausgleich für Lager mit verschiedenen axialen Längen zu ermöglichen. Am überlappenden Ende laufen die Schneiden für die Mantelfläche durch leichten Abfall oder starke Verrundung sanft aus, um im Überlappungsbereich keine umlaufende Kante zu erzeugen.

Die andere Möglichkeit besteht darin, die Unterstiche mit einem speziellen Fräser durchzuführen, während ein anderer Fräser nur Schneiden für die Zapfenbearbeitung aufweist, also keine vorspringenden Schneidenbereiche für einen Unterstich. Ein derartiger reiner Zapfenfräser kann relativ schmal ausgebildet sein, also schmaler als die kürzeste zu erwartende axiale Streckung eines Lagerzapfens. Um die gesamte axiale Länge des Lagerzapfens zu bearbeiten, wird diese Fräseinheit zusätzlich langsam in Längsrichtung, also Z-Richtung, verfahren, so daß eine spiralige, bandförmige Bahn entlang der Mantelfläche des Zapfens bearbeitet wird.

Gegenüber der bekannten Bearbeitung von in axialer Richtung nebeneinanderliegenden, leicht überlappenden ringförmigen Bereichen ergibt sich dadurch kein ringförmiger, nie vollständig zu vermeidender Absatz zwischen den einzelnen ringförmigen Bereichen.

Durch die hohen Schnittgeschwindigkeiten ist es auch möglich, Vorschub und Spandicke gering zu halten, und dadurch eine hohe Bearbeitungsqualität bei dennoch niedriger Bearbeitungszeit zu erzielen.

Das Hochgeschwindigkeitszerspanen, insbesondere das Hochgeschwindigkeitsfräsen, vereint daher eine Vielzahl von Vorteilen in sich:

Das Werkstück wird nur zentrisch, also auf der Längsachse der Hublagerstellen, gespannt und nur langsam angetrieben. Damit wirken sich Unwuchten des Werkstückes selbst kaum auf den Bearbeitungsprozeß aus und die Schnittgeschwindigkeit wird primär durch die Rotation des z. B. scheibenförmigen Außenfräsers erzielt. Damit ist es prinzipiell möglich, mehrere solcher Werkzeugeinheiten unabhängig voneinander am Werkstück arbeiten zu lassen. Auch die Hublager werden bei zentrischer Aufspannung des Werkstückes bearbeitet, wobei der Außenfräser lediglich auf der X-Achse verfahrbar sein muß. Aufgrund der relativ langsamen Drehung des Werkstückes kann durch diese X-Verfahrung während der Rotation des Hublagerzapfens das Fräswerkzeug diesem ständig nachgeführt werden.

Auch die Bearbeitung von tangentialen, ebenen Flächen am Werkstück bzw. von unrunden Außenflächen ist möglich, und sogar das Fräsen von Kavitäten in der Werkstückoberfläche, solange deren Krümmungsradius größer ist als der Radius des Außenfräsers.

Durch tangentiale Abfräsungen am Werkstück kann beispielsweise auch ein Wuchtvorgang direkt in der Arbeits-Aufspannung vorgenommen werden, indem in der ermittelten Winkellage Masse vom Werkstück abgenommen wird, bis die Unwucht beseitigt ist.

Trotz der für das Fräsen von Mantelflächen typischen Facettierung der Oberfläche sind mit dem Hochgeschwindigkeitsaußenfräsen so geringe Rundheitsabweichungen erzielbar wie sie auch mit dem Dreh-Drehräumen, bei weitem jedoch nicht mit dem Innenfräsen erzielbar sind. Dennoch liegt die Bearbeitungszeit beim Hochgeschwindigkeitsfräsen um ca. den Faktor 3-5 unter der Bearbeitungszeit des Dreh-Drehräumens und etwa Faktor 2 unter der Bearbeitungszeit des Innenfräsens.

Aufgrund der sehr geringen Spandicke (gemeint ist die mittlere oder die maximale Spandicke, da sich bei z. B. der Mantelflächenbearbeitung durch Außenrundfräsen die Dicke des Spanes in dessen Verlauf ändert) und eine relativ kurze Spanlänge sind einerseits die in das Werkstück eingeleiteten Schnittkräfte gering, und andererseits wird der größte Teil der Prozeßwärme in den Span eingeleitet, jedoch nicht in das Werkstück und Werkzeug,, so daß aus dynamischen und thermischen Gründen eine sehr gute Maßhaltigkeit am Werkstück erzielt wird.

Aufgrund der Schneidparameter und Schneidstoffe wird das Werkstück in der Regel trocken, also ohne Verwendung eines Kühl-Schmier-Mittels, bearbeitet, was die Entsorgung der Späne wesentlich vereinfacht.

Wenn zusätzlich ein Durchmesser des Fräsers gewählt wird, der größer ist als die für die herzustellende Kurbelwelle notwendige Eintauchtiefe beim vom Werkzeug abgewandten Hublager, also bei einem Hub einer Kurbelwelle von z. B. 120 mm und einer Eintauchtiefe von ca. 200 - 250 mm ein Durchmesser des Außenfräsers von mindestens 700, besser 800-1000 mm, gewählt wird, sind für die Erzielung der gewünschten Schnittgeschwindigkeit nur relativ geringe Drehzahlen des Werkzeuges von 50-300 Umdrehungen/Minute notwendig. Durch den großen Durchmesser des Fräsers nimmt auch der Zeitabstand zwischen zwei aufeinanderfolgenden Schneideingriffen ein und derselben Schneide zu, mithin also auch die für die Abkühlung der Schneide und des angrenzenden Werkzeuggrundkörpers zur Verfügung stehende Zeit, was die thermische Belastung des Werkzeuges verringert und damit dessen Lebensdauer erhöht.

Auch die Ausrichtung der einzelnen Schneiden auf einer exakten Kreisbahn gegenüber dem Werkzeuggrundkörper wird mit zunehmendem Durchmesser des Fräsers erleichtert.

Durch zusätzliche Verwendung einer positiven Schneidengeometrie anstelle der bisher beim Fräsen angewandten negativen Schneidengeometrie, die vor allem in Verbindung mit den niedrigen mittleren oder maximalen Spandicken dennoch zu einer ausreichenden Standzeit der Schneidmittel führt, ergibt sich wiederum eine Reduzierung der Schnittkräfte und in der Folge auch eine Reduzierung der notwendigen Antriebsleistungen für das Werkzeug, die bei den angegebenen Größenverhältnissen nur etwa die Hälfte bis ein Drittel der für das Innenfräsen oder Dreh-Drehräumen benötigten Leistung liegt. Auch dadurch werden - neben den niedrigeren Energiekosten - die Abwärmeprobleme der Antriebe, die sich immer negativ auf die gesamte Maschine und das Bearbeitungsergebnis auswirken, minimiert.

Das erfindungsgemäße Hochgeschwindigkeitsfräsen kann dabei insbesondere nicht nur am ungehärteten, sondern auch am gehärteten (z. B. 60 bis 62 Rockwell -Härtegrade HRC, insbesondere durchgehärtet) Werkstück durchgeführt werden. In diesem Fall wird als Schneidstoff vorzugsweise Mischkeramik oder polykristallines Bornitrid (PKB), bei letzterem insbesondere wieder kubisches Bornitrid (CBN) eingesetzt. Vorzugsweise wird dabei zunächst eine Hartmetall-Schneidplatte gesintert, die jedoch Vertiefungen im Schneidenbereich, z. B. in der Spanfläche und zur Schneidkante hin offen, aufweist. In diese Vertiefungen des Grundkörpers wird CBN-Pulver gefüllt und anschließend gesintert.

Nicht nur die Ecken von Wendeschneidplatten können auf diese Art und Weise verstärkt werden, sondern durch Anordnung mehrerer CBN-Pellets nebeneinander entlang einer Schneidenkante oder eines balkenförmigen CBN-Einsatzes kann eine ganze Schneidkante verstärkt werden. Auch ungehärteter Stahl oder Guß kann damit bearbeitet werden, auch mittels Fräsen.

Diese Schneidstoffe können auch ohne Kühlschmiermittel, also trocken, eingesetzt werden, was Entsorgungskosten und Umweltprobleme erspart.

Dadurch ist es möglich, den bei konventioneller Herstellung (spanende Bearbeitung vor dem Härten) auftretenden Verzug des Werkstückes, bedingt durch den Härteprozeß, bereits durch die spanende Bearbeitung mit abzuarbeiten. Da beim Hochgeschwindigkeitsfräsen und insbesondere beim Hochgeschwindigkeitsfräsen am gehärteten Werkstück Oberflächenqualitäten erzielbar sind, die als Endzustand des Werkstückes akzeptabel sind, ist dadurch der völlige Wegfall zumindest des Grobschleifbearbeitungsvorganges möglich.

Als besonders günstig hat es sich erwiesen, bei der Bearbeitung der Zapfen- und Wangenflächen bei Kurbelwellen, die aus Guß oder Stahl bestehen, und im ungehärteten Zustand spanend bearbeitend werden mittels eines Außenrundfräsers, insbesondere mittels eines scheibenförmigen Fräsers mit Schneiden am Umfangsbereich, folgende Parameter einzuhalten:
- Schnittgeschwindigkeit bei der Schruppbearbeitung: mindestens 180, besser 250-600 m/min,
- Schnittgeschwindigkeit bei der Schlichtbearbeitung: mindestens 200, besser 300-800 m/min,
- Spandicke: 0,05 - 0,5 mm insbesondere 0,1-0,3 mm.

Als Werkzeug wird dabei in der Regel ein scheibenförmiger, drehend angetriebener Werkzeuggrundkörper mit aufgesetzten Wendeschneidplatten verwendet. Dabei sind die Schneidplatten hinsichtlich ihres Einsatzzweckes (Bearbeitung der Stirnflächen an den Wangen, Bearbeitung der Mantelflächen an den Zapfen der Hauptlagerstelle und Hublagerstellen, Erstellen der Unterstiche am Übergang zwischen Mantelflächen und Stirnflächen) unterschiedlich gestaltet und auch in bezug zum Werkzeugträger bzw. zum Werkstück unterschiedlich positioniert:

| | Wangenplatte | | Unterstichplatte | | Zapfenplatte (Planplatte) | |
|---|---|---|---|---|---|---|
| Grundmaterial | K20-K25 | | K15 | | K10-K15 | |
| Beschichtung | TiCN+Al₂O₃+TiN oder TiN+TiCN+Al₂O₃+T iN oder TiN+Al₂O₃+TiN | | TiN | | TiCN+Al₂O₃+TiN oder TiN+TiCN+Al₂O₃+T iN oder TiN+Al₂O₃+TiN | |

| | von/bis | insbes. | von/bis | insbes. | von/bis | insbes. - |
|---|---|---|---|---|---|---|
| Gesamtdicke der Beschichtung | 3-15 µm | 10-12 µm | 2-8 µm | 3-5 µm | 2-8 µm | 3-5 µm |
| γₚ | +1°... +8° | +5° | +4° | +4° | +2° | +2° |
| γ_{f} | -4°...+4° | -1° | +1° | +1° | +2° | +2° |
| γₙ | +5°... +14° | +9° | +9° | +9° | +9° | +9° |
| λₛ | +2°... +7° | +5° | +5° | +5° | +3° | +3° |
| κ | um +2° | 5° | | 4° | | - |
| Schneidkantenverrundung (SKV) | 0,01-0,05 mm | ca. 0,02 mm | ca. 0,02 mm | ca. 0,02 mm | ca. 0,02 mm | ca. 0,02 mm |
| Eckenradius R | 1,2-2,0 mm | 1,6 mm | 1,6 mm | 1,6 mm | - | - |
| Länge | min. 10 mm | 15,9 mm | 15,9 mm | 15,9 mm | 12,7 mm | 12,7 mm |
| Höhe | min. 10 mm | 12,7 mm | 12,7 mm | 12,7 mm | 12,7 mm | 12,7 mm |
| Dicke | min. 3 mm | 6,35 mm | 5,55 mm | 5,55 mm | 4,7 mm | 4,7 mm |

| **Angaben in bezug auf den Werkzeuggrundkörper:** | | | | | | |
|---|---|---|---|---|---|---|
| Schnittbreite | 23 mm | | - | | 13 mm (geteilt) bis 22 mm (komplett) | |
| Nenndurchmesser | z.B. 800 mm | | z.B. 800 mm | | z.B. 800 mm | |
| Teilungswinkel von Schneide zu Schneide | 3,6° | | 5,5°-7,5° | | 5,5°-7,5° | |
| Teilungsabstand von Schneide zu Schneide | 25 mm | | 35-50 mm | | 35-50 mm | |
| Anzahl | z.B. 200 | | z.B. 120 (geteilt) | | z.B. 120 (geteilt) | |
| Schneidplatten | | | bis 200 (komplett) | | bis 200 (komplett) | |

Die Angabe des Grundmaterials bezieht sich auf die bekannten ISO-Anwendungsgruppen. Dabei besteht
K10: aus 94,2 % Wolframkarbid (WC), 5,5 % Kobalt (Co) und 0,3 % ... (Ta/C)
K20: aus 93,2 % WC, 6 % Co und 0,6% Ta/C und 0,2 % Titankarbid (TiC)

Die Biegefestigkeit beträgt 1.900 N/m² bei K10 und 2.000 N/m² bei K20.

Bei den angegebenen Beschichtungen sind die einzelnen Verbindungen schichtweise nacheinander in der angegebenen Reihenfolge von innen nach außen aufgetragen.

Die geometrischen Parameter des Werkzeuges, insbesondere der Wendeschneidplatten für den Außenrundfräser, sind im Folgenden anhand der Figuren näher erläutert. Es zeigen:
- Fig. 1:: den Schneidkeil des Werkzeuges in Prinzipdarstellung,
- Fig. 2:: die Schneiden und Flächen am Schneidteil eines Drehmeißels,
- Fig. 3 und 4:: definierte Ebenen im Werkzeugbezugssystem,
- Fig. 5 und 6:: die Lagewinkel der Schneide im Werkzeugbezugssystem am Beispiel eines Drehmeißels für das Längsdrehen (Fig. 5) und das Plandrehen (Fig. 6).
- Figuren 7a-7f:: unterschiedliche Schnitte durch ein Drehwerkzeug in den angegebenen Ebenen gemäß Fig. 3 und 4, und

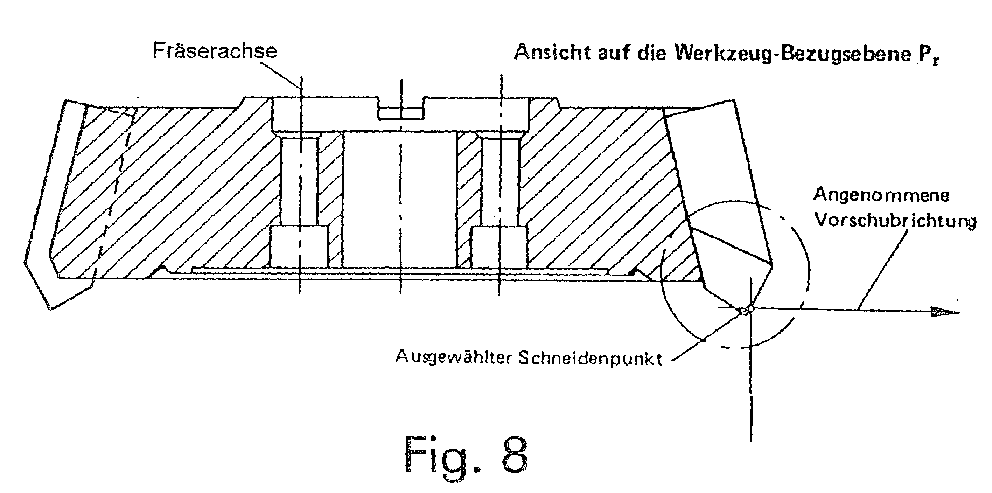

- Fig. 8:: einen Schnitt durch einen Fräsmesserkopf,
- Figuren 9a-9f:: Schnitte durch das Werkzeug des Fräsmesserkopfes gemäß Fig. 8,
- Fig. 10a:: zeigt den Einsatz einer Wangenplatte, betrachtet in Y-Richtung,
- Fig. 10b:: den Einsatz einer Zapfenplatte in Blickrichtung Y,
- Fig. 11:: zeigt die Zapfenbearbeitung betrachtet in Z-Richtung,
- Fig. 12:: zeigt die Wangenbearbeitung, betrachtet in Z-Richtung, und
- Fig. 13:: eine Übersicht der an einer Kurbelwelle zu bearbeitenden Flächen.

Die entsprechenden Bezeichnungen sind in der deutschen Industrienorm DIN 6581 festgelegt.

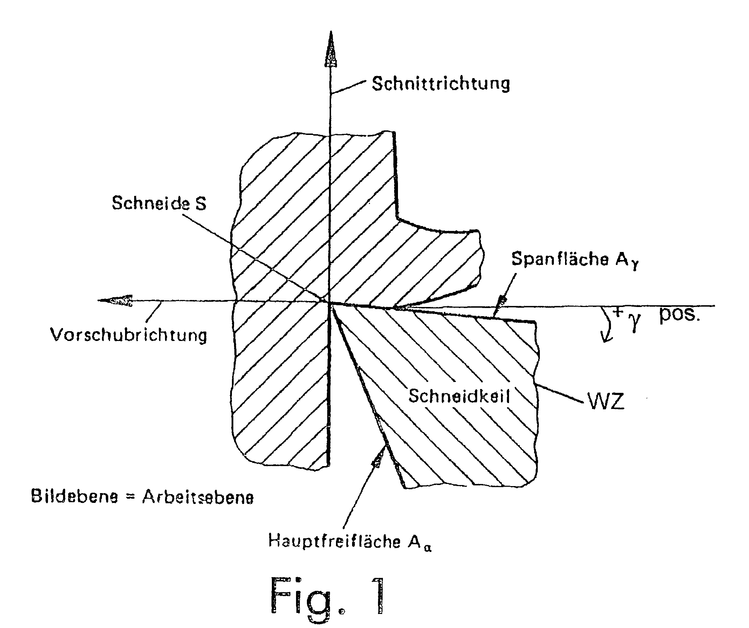

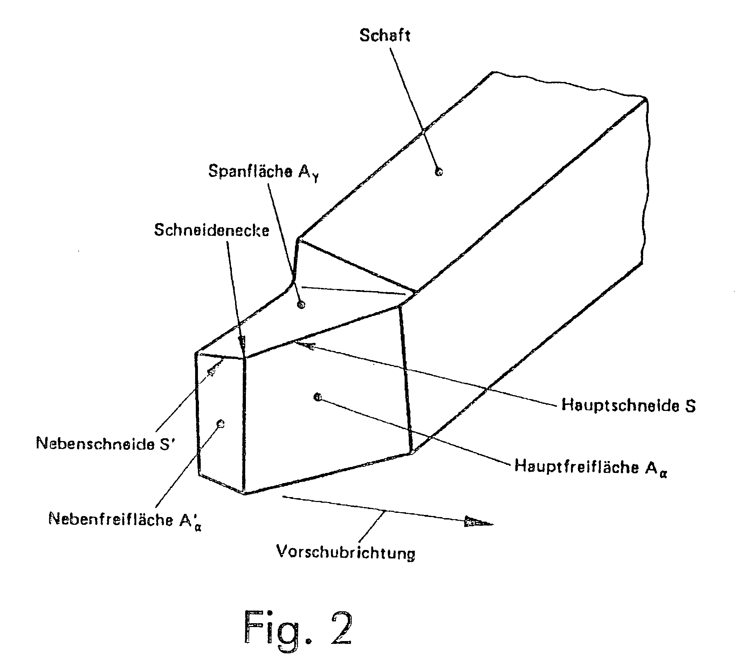

Dabei zeigt Fig. 1 einen Schnitt durch ein spanendes Werkzeug WZ, beispielsweise den in Fig. 2 perspektivisch dargestellten Drehmeißel, wobei die meisten Bezeichnungen und Winkel sowohl für das Drehen, als auch für das Fräsen gelten. Dabei wird die Schneide, beispielsweise die Hauptschneide S, durch die durch die Spanfläche A_{γ} sowie die Hauptfreifläche A_{α} gebildete Kante gebildet, und die Nebenschneide S' (siehe Fig. 2) durch die Spanfläche A_{γ} und die im Winkel zur Hauptfreifläche A_{α} verlaufende Nebenfreifläche A'_{α}. Die in Fig. 1 spitz gezeichnete Schneide S ist in der Praxis niemals vollständig spitz, sondern muß eine gewisse Rundung, die Schneidkantenverrundung SKV, besitzen, um ein Ausbrechen der Schneidkante zu verhindern.

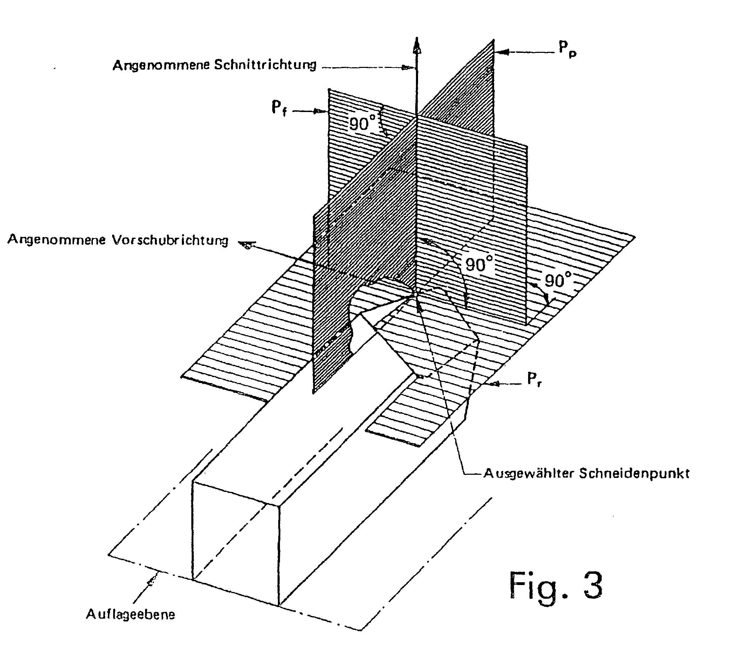

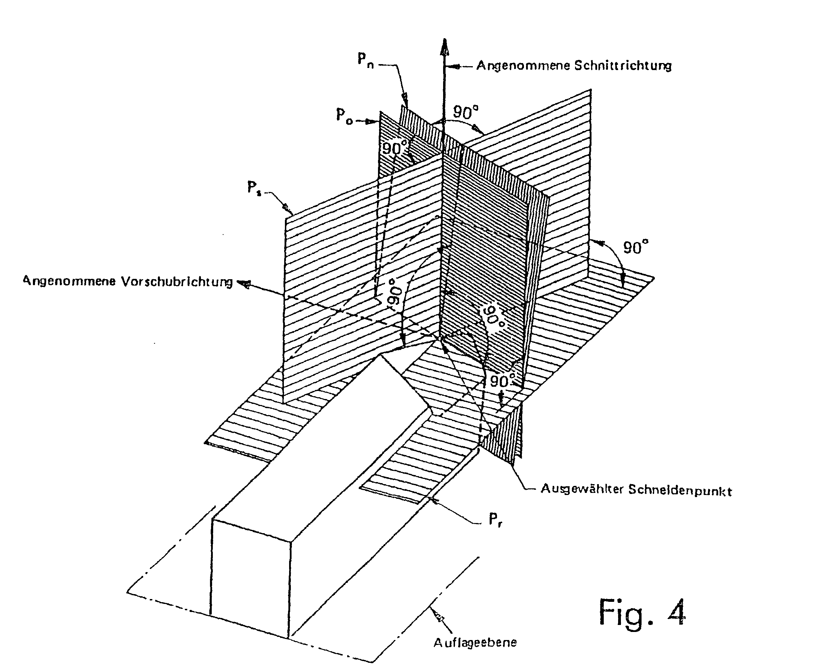

In den Fig. 3 und 4 sind verschiedene Richtungen und Ebenen bezüglich des Werkzeuges definiert.

Dabei ist die Werkzeug-Bezugsebene Pᵣ eine Ebene durch den ausgewählten Schneidenpunkt, und zwar senkrecht zur angenommenen Schnittrichtung. Die Werkzeug-Bezugsebene Pᵣ ist dabei möglichst so gewählt, daß sie parallel oder senkrecht zu einer Achse des Werkzeuges liegt. Eine Festlegung muß für jeden Werkzeugtyp individuell erfolgen. Bei Drehmeißeln ist die Werkzeug-Bezugsebene Pᵣ eine Ebene parallel zur Auflagefläche des Schaftes bei konventionellen Drehmeißeln, bei Fräswerkzeugen eine Ebene, die die Achse des Fräswerkzeuges enthält.

Die angenommene Arbeitsebene P_{f} ist eine Ebene durch den ausgewählten Schneidenpunkt, senkrecht stehend auf der Werkzeug-Bezugsebene Pᵣ und parallel zur angenommenen Vorschubrichtung.

Die Werkzeug-Rückebene Pₚ ist eine Ebene durch den ausgewählten Schneidenpunkt, senkrecht zur Werkzeug-Bezugsebene Pᵣ und senkrecht zur angenommenen Arbeitsebene P_{f}. Pᵣ, Pₚ und P_{f} stellen somit ein Koordinatensystem durch den angenommenen Schneidenpunkt dar.

Die Werkzeug-Schneidenebene Pₛ (siehe Fig. 4) ist eine Ebene durch den Schneidenpunkt, tangential zur Schneide S und senkrecht zur Werkzeugs-Bezugsebene Pᵣ. Wenn die Werkzeugschneide S rechtwinklig zur Vorschubrichtung liegt, fallen Werkzeug-Schneidenebene Pₛ und Werkzeug-Rückebene Pₚ zusammen.

Die Werkzeug-Orthogonalebene P₀ ist eine Ebene durch den Schneidenpunkt, senkrecht zur Werkzeug-Bezugsebene Pᵣ und senkrecht zur Werkzeug-Schneidenebene Pₛ. Wenn somit die Werkzeugschneide S rechtwinklig zur Vorschubrichtung liegt, fallen Werkzeug-Orthogonalebene P₀ und angenommene Arbeitsebene P_{f} zusammen.

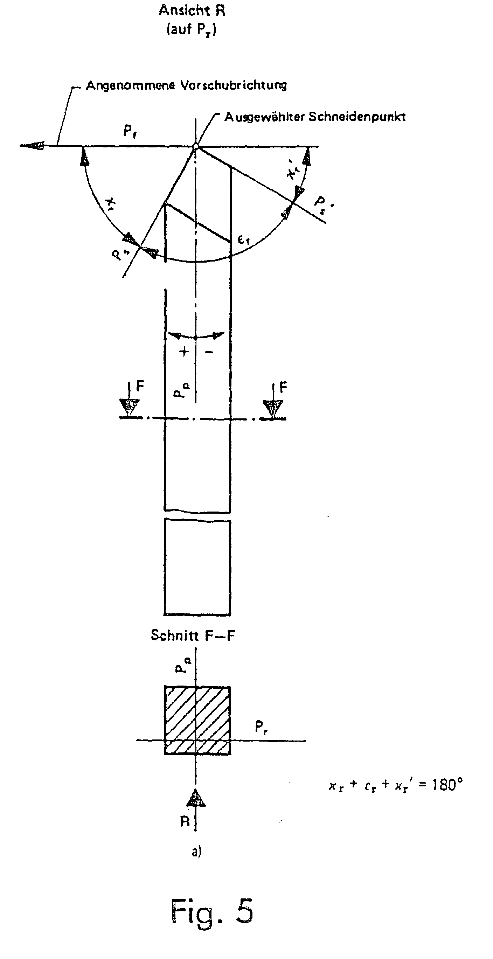

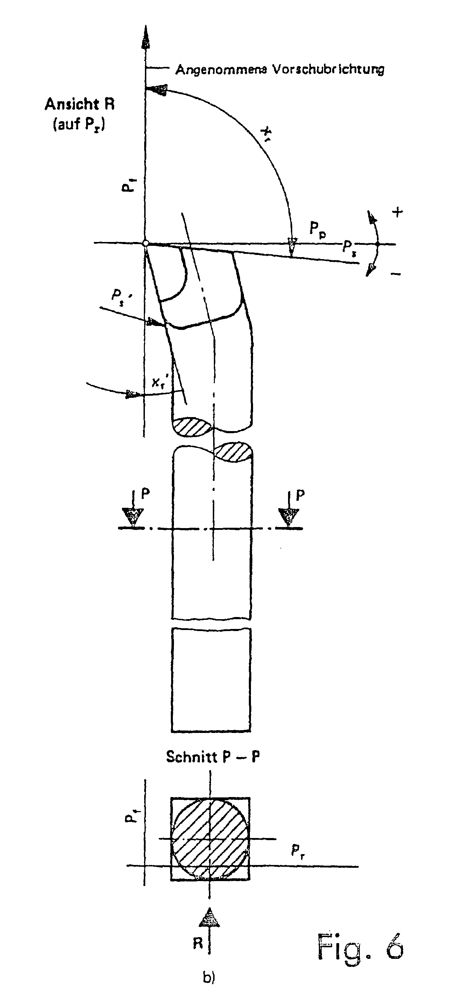

Aus den Figuren 5 und 6 ist - getrennt für das Längsdrehen und das Plandrehen - die Orientierung der einzelnen Werkzeugschneiden zum Werkstück besser ersichtlich. In dieser Aufsicht betrachtet hat das Werkzeug an seiner Schneidenspitze einen Werkzeug-Eckenwinkel εᵣ zwischen der Werkzeug-Schneidenebene Pₛ der Hauptschneide und der Werkzeug-Schneidenebene P'ₛ der Nebenschneide, gemessen in der Werkzeug-Bezugsebene Pᵣ.

Dabei steht die Hauptschneide in einem Werkzeug-Einstellwinkel κᵣ zwischen der Werkzeug-Schneidenebene Pₛ und der angenommenen Arbeitsebene P_{f} gemessen in der Werkzeug-Bezugsebene Pᵣ.

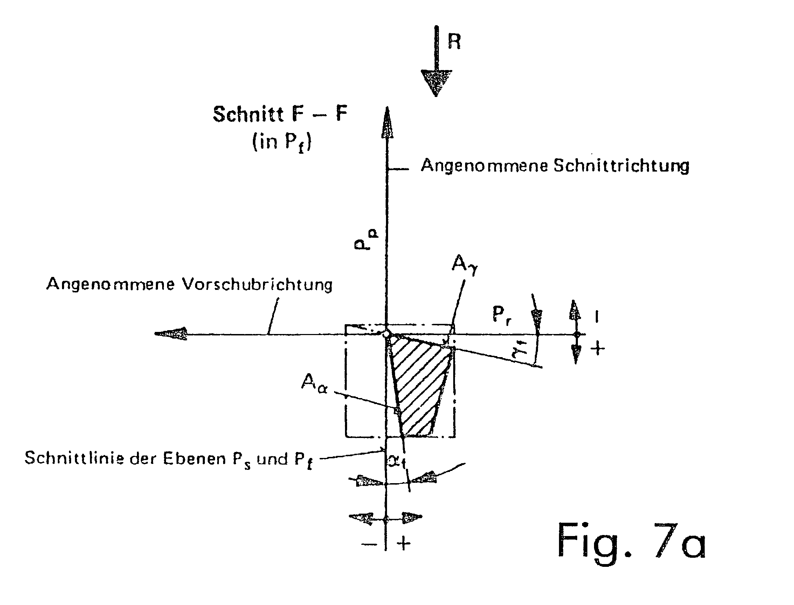

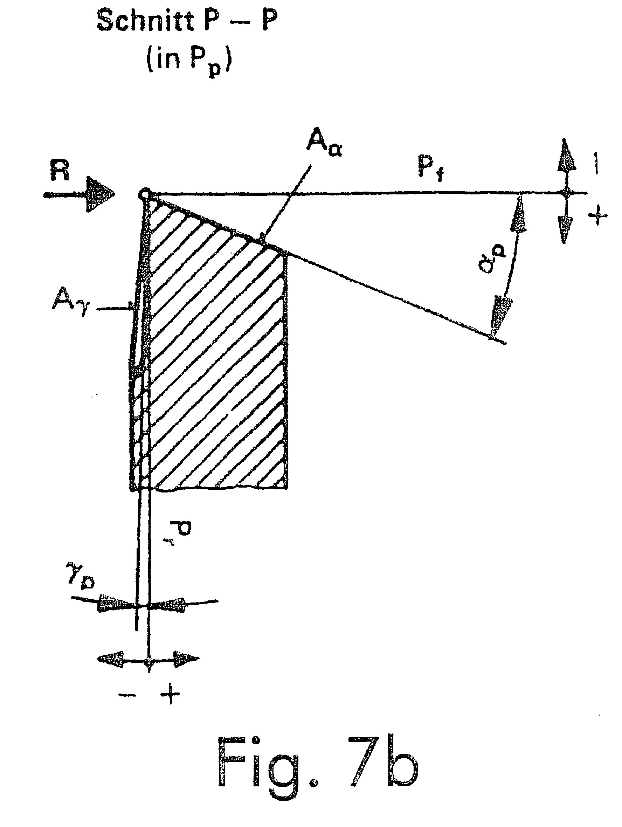

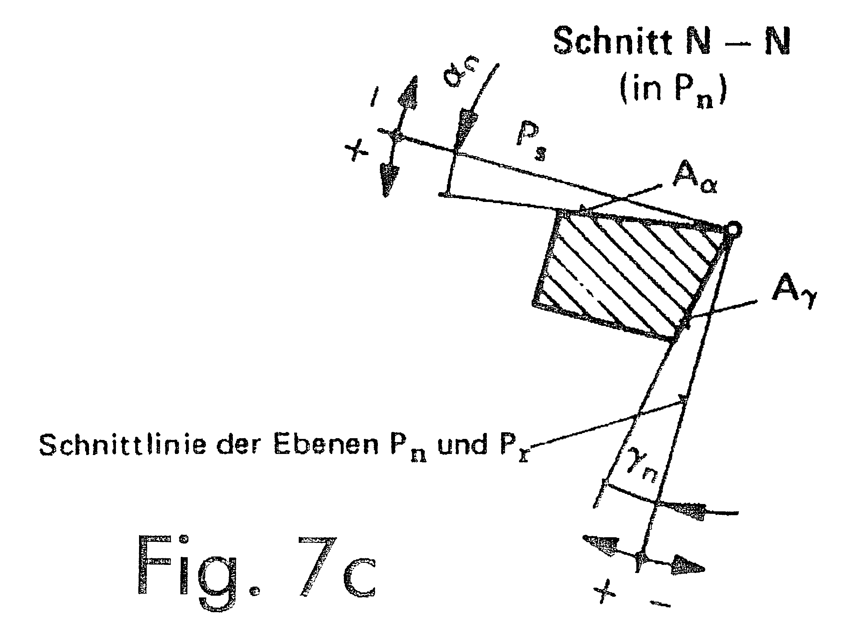

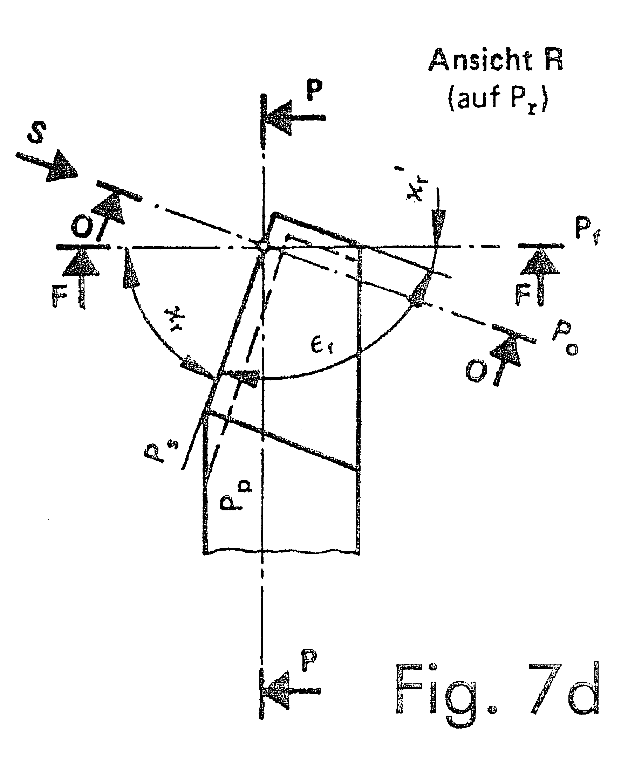

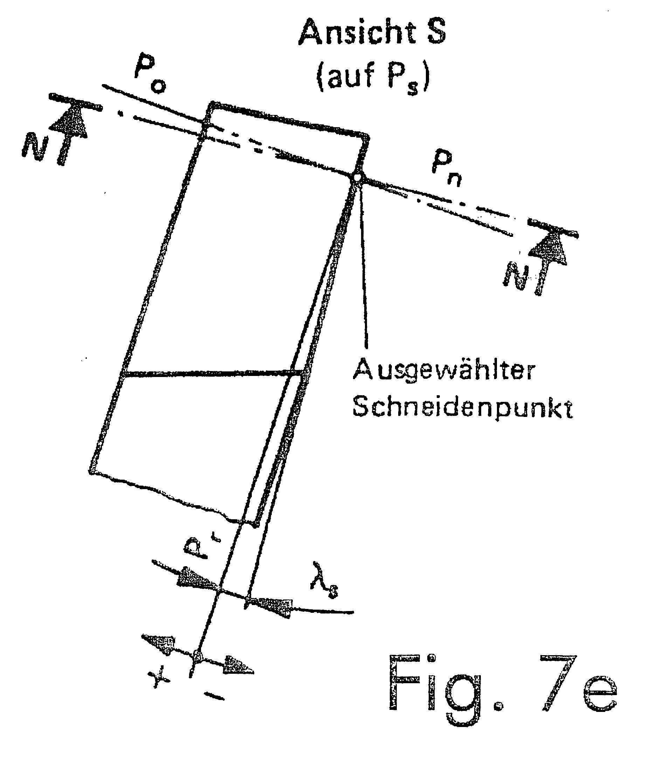

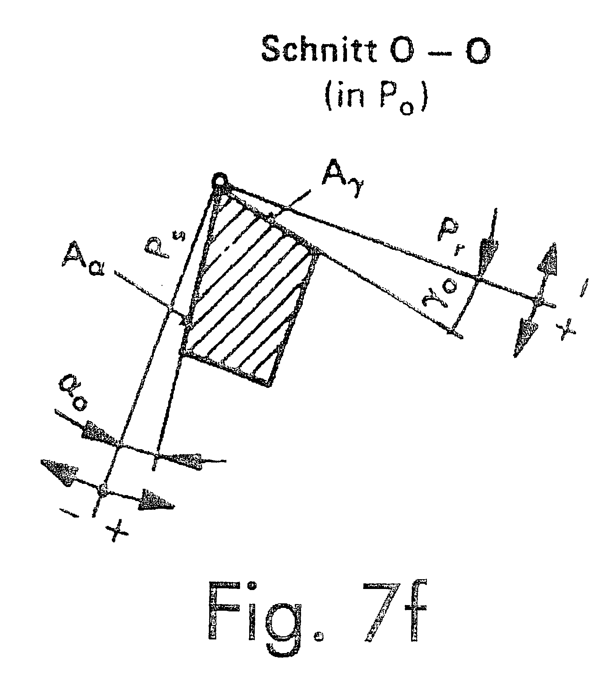

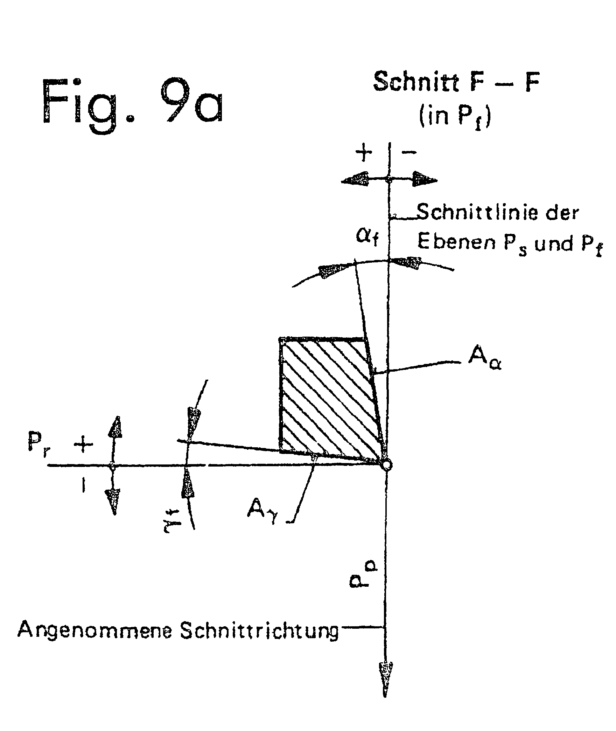

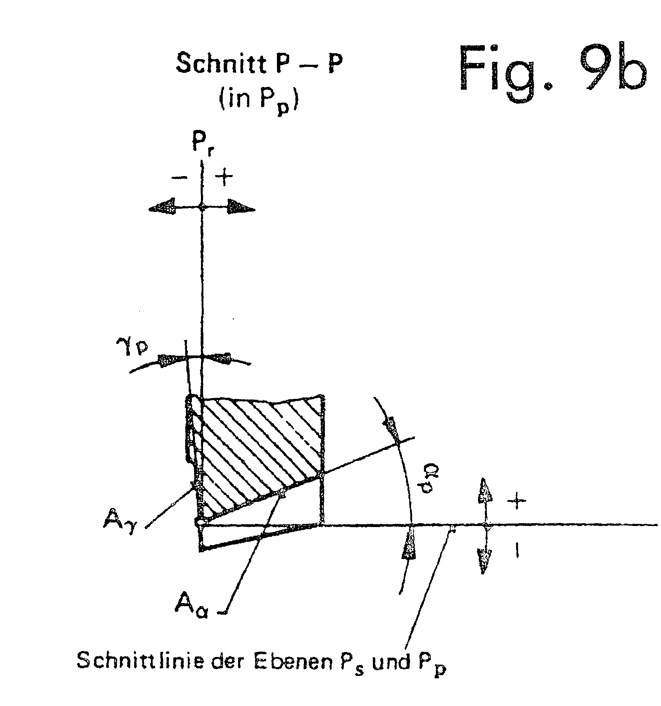

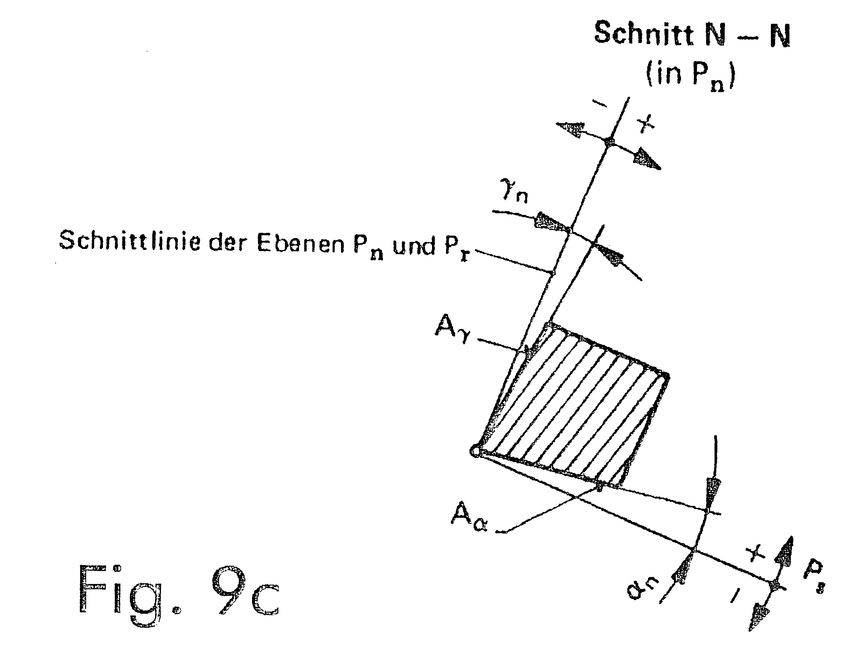

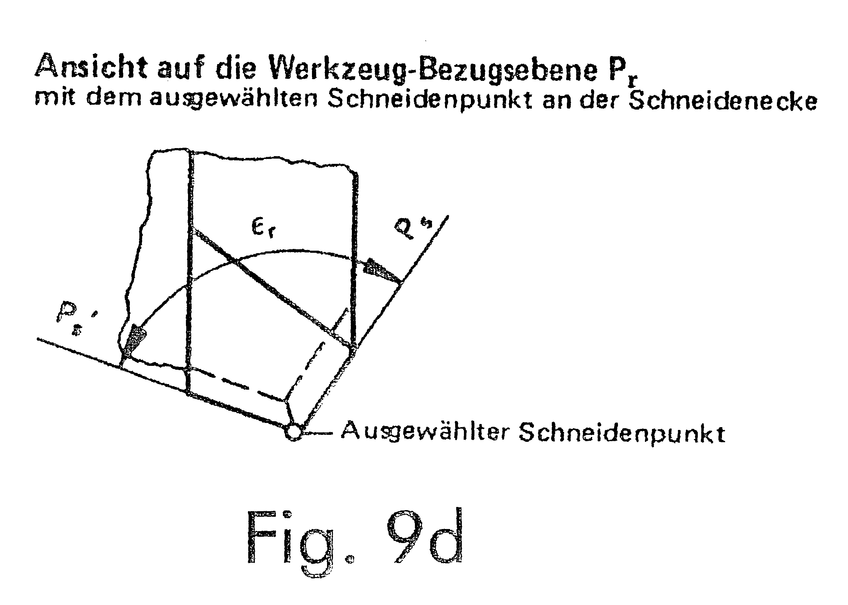

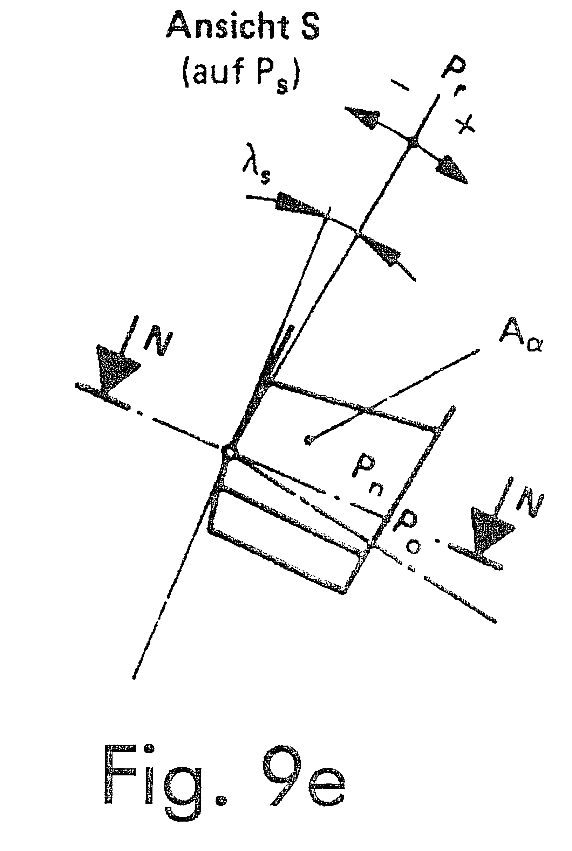

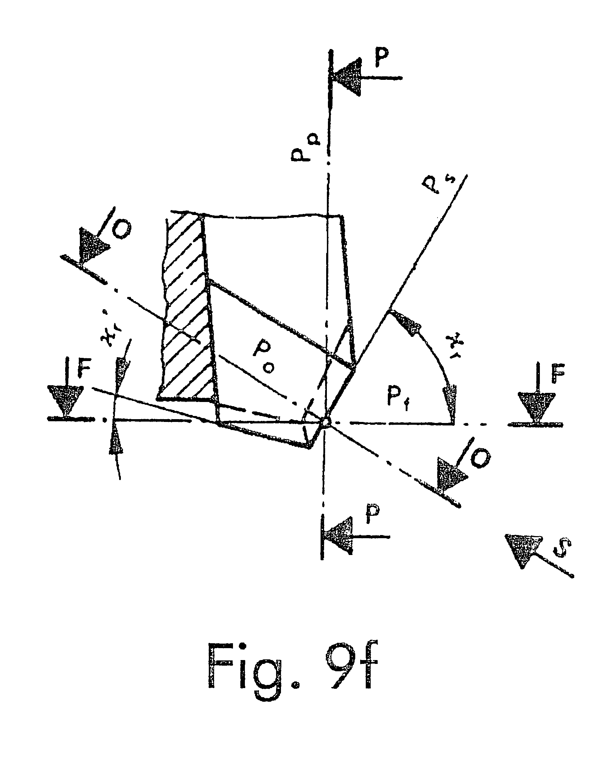

In den Figuren 7a-7f sowie 9a-9f ist die Lage der einzelnen Schnitte und Ansichten zum Teil aus den Figuren 5 und 6 direkt entnehmbar.

Die relevanten Winkel dabei sind:
- Werkzeug-Seitenspanwinkel γ_{f}: Winkel zwischen der Spanfläche A_{γ} und der Werkzeug-Bezugsfläche Pᵣ, gemessen in der Arbeitsebene P_{f};
- Werkzeug-Rückspanwinkel γₚ: Winkel zwischen der Spanfläche A_{γ} und der Werkzeug-Bezugsebene Pᵣ, gemessen in der Werkzeug-Rückebene Pₚ;
- Werkzeug-Normalspanwinkel γₙ: Winkel zwischen der Spanfläche A_{γ} und der Werkzeug-Bezugsebene Pᵣ, gemessen in der Werkzeug-Schneidennormalebene Pₙ; Der Wert dieses Winkels γₙ (positiv oder negativ) wird verallgemeinert meist als "positive/negative Schneidengeometrie" bezeichnet.
- Werkzeug-Neigungswinkel λₛ (Fig. 7e und 9e): Winkel zwischen der Schneide S und der Werkzeug-Bezugsebene Pᵣ, gemessen in der Werkzeug-Schneidenebene Pₛ.

Dieser Werkzeug-Neigungswinkel λₛ ist ein spitzer Winkel, dessen Spitze zur Schneidenecke hinweist. Er ist positiv, wenn die von der Schneidenecke aus zu betrachtende Schneide auf der der angenommenen Schnittrichtung abgekehrten Seite der Werkzeug-Bezugsebene Pᵣ liegt.

Mit α wird generell der Freiwinkel einer Schneide bezeichnet.

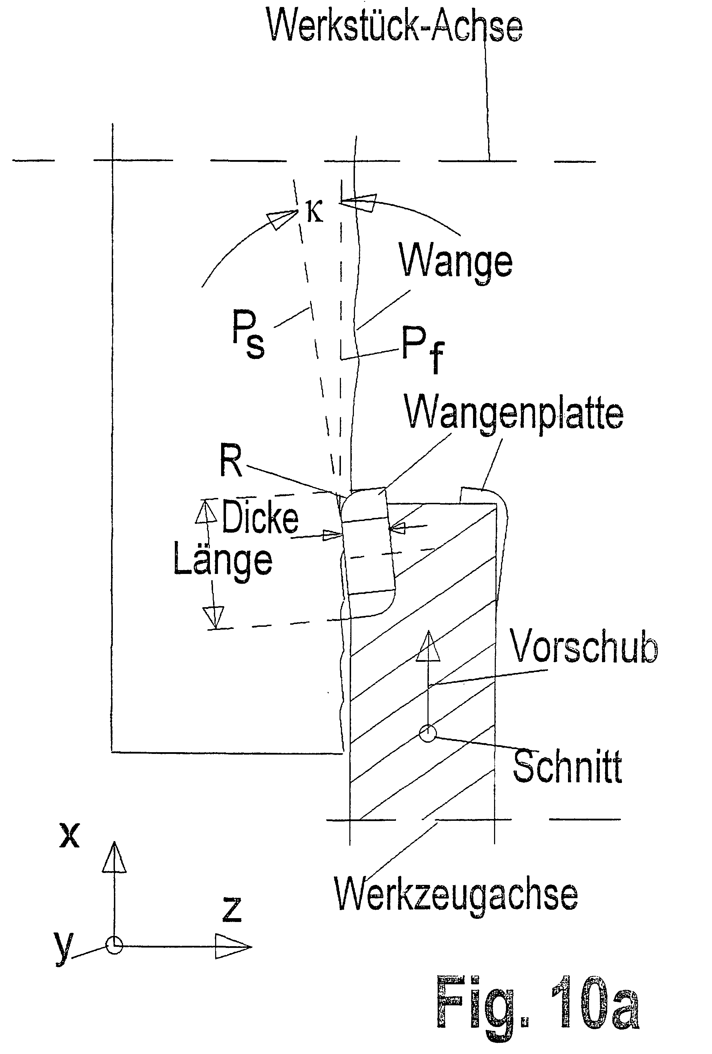

Fig. 10a zeigt eine Wangenplatte, die auf den scheibenförmigen Grundkörper des Fräsers - vorzugsweise beiderseits - stirnseitig aufgeschraubt ist, und dabei sowohl radial als auch stirnseitig über den Grundkörper übersteht. Um von der Stirnfläche der Wange das Material abzutragen, wird bei rotierendem Fräser dieser in X-Richtung, also radial zum Werkstück, als Vorschubrichtung vorwärts bewegt. Dabei steht die plättchenförmige Wangenplatte mit ihrer Ebene, der Werkzeug-Schneidenebene Pₛ im kleinen Winkel κ zur Arbeitsebene P_{f}, die sich aus der Vorschubrichtung (X-Richtung) und der in der X-Y-Ebene liegenden Schnittrichtung zusammensetzt. Dadurch ragt die äußerste, mit dem Eckenradius R von etwa 1,6 mm gerundete Kante des Schneidplättchens vom Grundkörper schräg nach außen und bildet den axial am weitesten vorstehenden Punkt gegenüber dem Grundkörper des Fräsers.

Je größer der Winkel κ ist, um so wellenförmiger wird die bearbeitete Stirnfläche der Wange, wie an dem bereits bearbeiteten Teil in Fig. 10a zu erkennen.

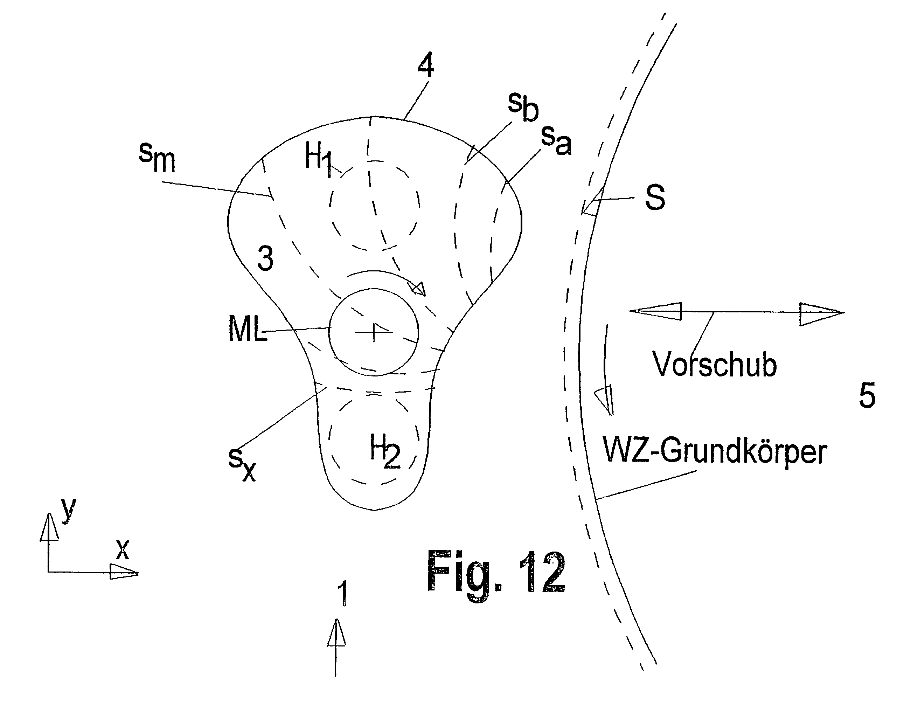

Um die gesamte Stirnfläche einer Wange bearbeiten zu können, ist neben dem in Fig. 10a dargestellten Vorschub in X-Richtung des Fräsers zusätzlich (siehe Fig. 12) ggf. eine zusätzliche Drehung der Kurbelwelle notwendig, wenn beispielsweise die Wangenfläche bis an den Hublagerzapfen H₂ heran und um diesen herum bearbeitet werden soll.

In Fig. 12 sind einige der Vielzahl von einzelnen Schnitten sₐ bis sₓ, die für die vollständige Wangenbearbeitung notwendig sind, eingezeichnet. Dabei ist ersichtlich, daß zum einen innerhalb jedes der Schnitte das Verhältnis zwischen der im Anfangsbereich des Schnittes liegenden größten Spandicke und der meist am Ende auftretenden geringsten Spandicke unterschiedlich groß. Zusätzlich wird die Spandicke sowohl durch den Vorschub des Fräsers in X-Richtung, als auch durch die Geschwindigkeit der Drehung des Werkstückes beeinflußt.

Um eine möglichst gleichmäßige mittlere Spandicke hₘᵢₜₜ zu erzielen und als zweites Optimierungsziel die gewünschte optimal hohe Schnittgeschwindigkeit, welche primär durch die Drehung des Fräsers bewirkt wird, zu erzielen, müssen bei der Bearbeitung der Wangenseitenfläche sowohl die Drehgeschwindigkeit des Werkstückes, als auch der Vorschub des Fräsers in X-Richtung als auch die Drehgeschwindigkeit des Fräsers meist ständig verändert werden.

Bei einer Wangenplatte wie in Fig. 10a dargestellt, wird als Länge der Schneidplatte die Ausdehnung der Platte in radialer Richtung des Fräsergrundkörpers, als Breite die Ausdehnung in tangentialer Richtung des scheibenförmigen Werkzeuggrundkörpers und als Dicke die Ausdehnung in der der axialen Richtung nächstkommenden Richtung des Schneidplättchens bezeichnet.

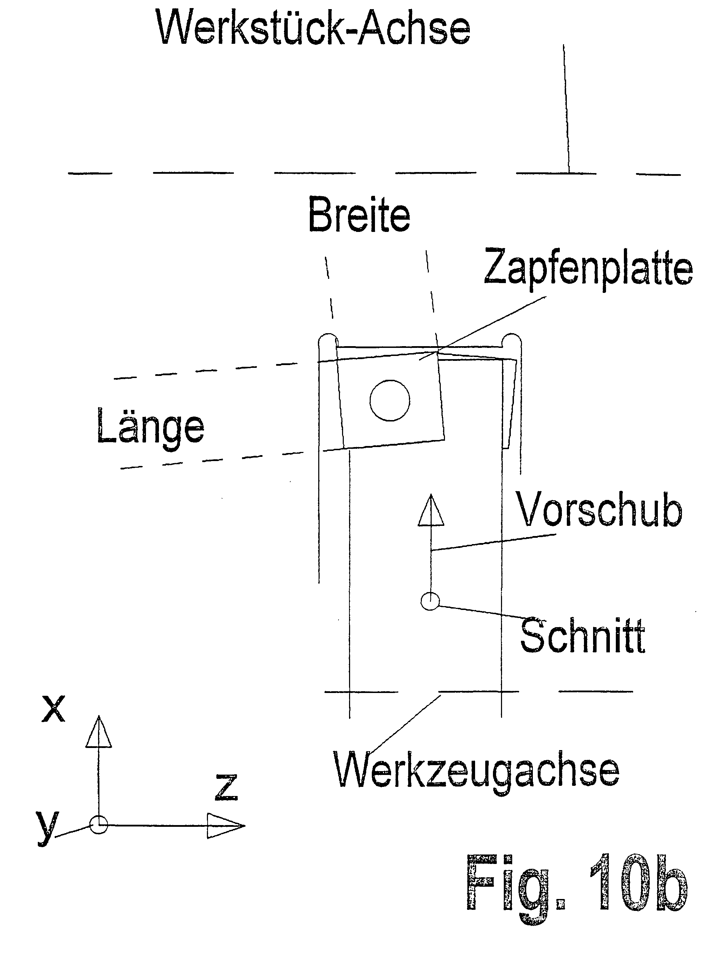

Fig. 10b zeigt in gleicher Blickrichtung wie Fig. 10a die Bearbeitung der Mantelfläche eines Zapfens der Kurbelwelle durch eine Zapfenplatte. Bei einer derartigen Platte sind als Länge und Breite die in der Aufsicht der Fig. 10b ersichtlichen Seiten gemeint, wobei als Zapfenplatten in der Regel quadratische Wendeschneidplatten verwendet werden, die somit vierfach hintereinander eingesetzt werden können.

Die Zapfenplatten können dabei mit ihrer außen liegenden, schneidenden Kante in einem geringen Winkel abweichend von der Z-Richtung innerhalb der Z-X-Ebene am Grundkörper des Scheibenfräsers befestigt sein, wenn gleichzeitig auch eine Abweichung von der Z-Richtung innerhalb der Z-Y-Ebene gegeben ist.

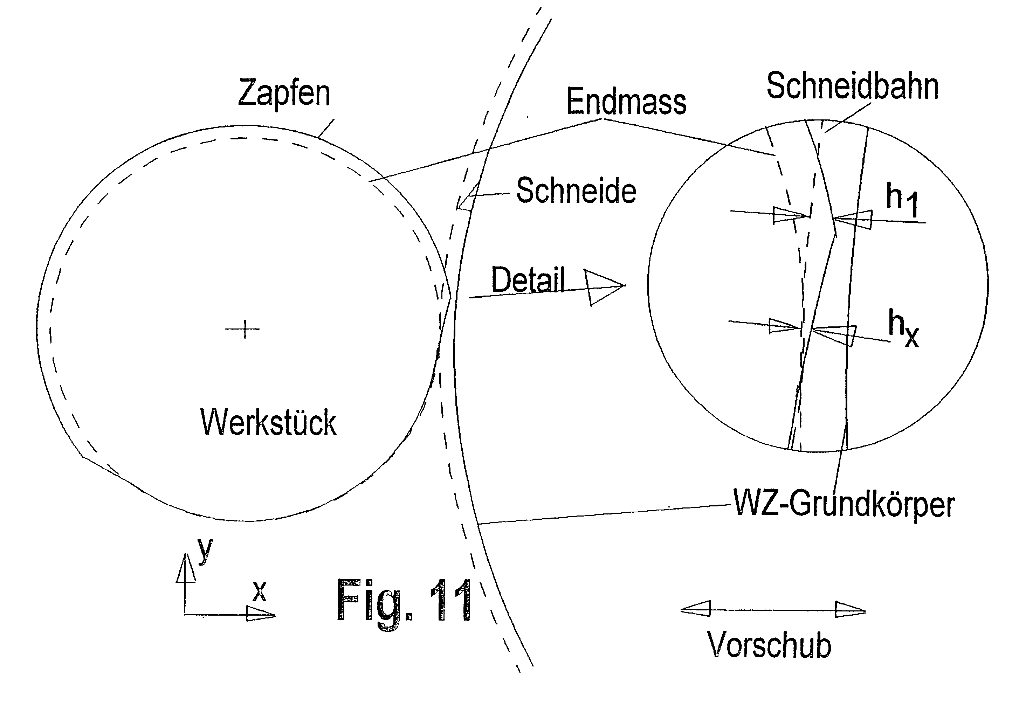

Wie die Ansicht der Zapfenbearbeitung betrachtet in Z-Richtung der Fig. 11, zeigt, wird vor allem bei der Zapfenbearbeitung, aber auch bei der Wangenbearbeitung, im Gleichlaufverfahren (Bewegungsrichtung der Fräserschneide = Bewegungsrichtung der Werkstückoberfläche) relativ zum Bearbeitungspunkt gearbeitet. Dadurch ergibt sich ein Span, dessen Spandicke am Anfang (h₁) relativ groß ist, und gegen Ende des Spanes immer mehr abnimmt (hₓ).

Der Gleichlauf ist deshalb zu bevorzugen, weil die Schneide beim Eingreifen in das Werkstück richtig einhakt, also aufgrund der am Anfang großen Spandicke ein Wegdrücken des Werkstückes in X-Richtung kaum stattfindet. Beim Gegenlauffräsen, bei dem der Span eine im wesentlichen während des Erzeugens zunehmende Spandicke aufweist, tritt genau dieser Effekt verstärkt auf, was eine stärkere Rundabweichung ergibt.

Bei der in Fig. 11 dargestellten Zapfenbearbeitung bleibt der Mittelpunkt des Fräsers - nach Zustellung auf Nennmaß - während des Abarbeitens des Umfanges des Zapfens in Ruhe, falls es sich um einen Mittellager-Zapfen handelt. Bei der Bearbeitung eines Hublagerzapfens dagegen muß der Fräser in X-Richtung ständig entsprechend der Rotation des Hublagerzapfens mit ca. 15 Umdrehungen/Minute um die Hauptlagerachse nachgeführt werden, und da sich der Hublagerzapfen nicht nur in X-, sondern auch in Y-Richtung bewegt, mit unterschiedlicher Geschwindigkeit, da der Fräser ausschließlich in X-Richtung bewegt wird.

Damit hängt - bei gleichbleibendem Aufmaß über den Umfang des Lagerzapfens - die angestrebte mittlere Spandicke hₘᵢₜₜ ausschließlich von der Drehgeschwindigkeit des Lagerzapfens um seine Mittelachse ab, bei einem Hublagerzapfen also von der Drehung des bearbeiteten Punktes auf der Mantelfläche um die Mitte des Hublagers.

Da die Kurbelwelle jedoch auf der Hauptlagerachse, also ihrer Symmetrieachse, gespannt ist, muß bei der Hublager-Zapfenbearbeitung selbst bei gleichbleibendem Aufmaß über den Hublagerumfang während des Umlaufes die Drehgeschwindigkeit des Werkstückes ständig geändert werden.

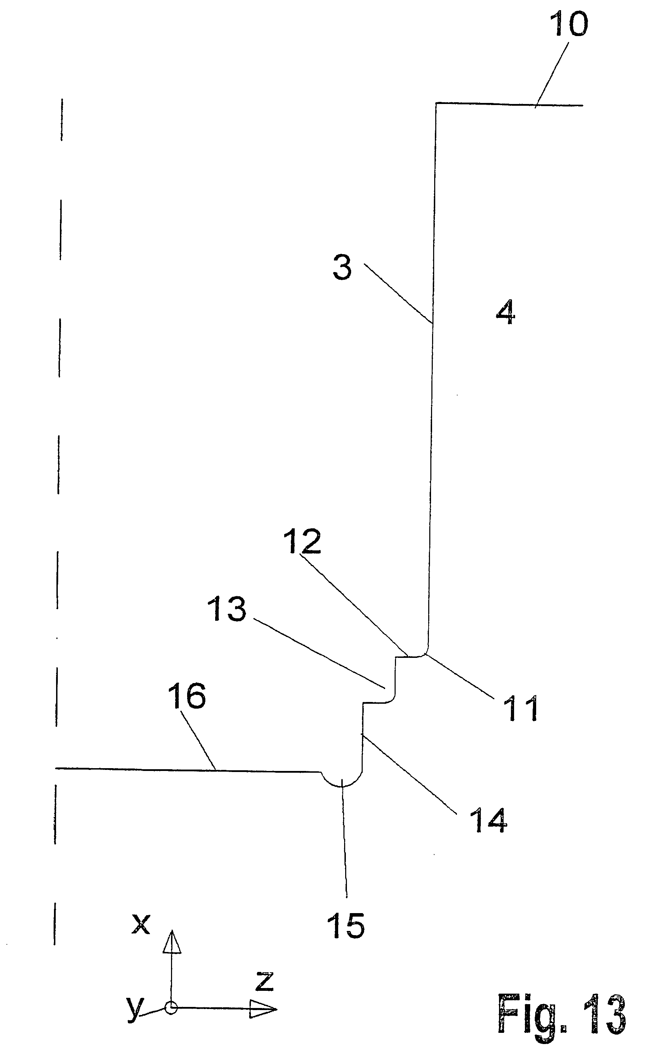

Fig. 13 zeigt diejenigen Flächen, die an einer Kurbelwelle zur Bearbeitung anstehen.

Zum einen ist dies die Wangenaußenkontur 10. Dabei kann es sich um eine kreisförmig gebogene Außenkontur, eine unregelmäßig gebogene, konvexe Außenkontur, aber auch eine teilweise mit ebener Außenfläche versehene Außenkontur handeln. Durch das Außenfräsen sind beliebige Konturformen herstellbar, auch ebene Flächen, die tangential zur Drehachse der Kurbelwelle oder auch im Winkel hierzu verlaufen, und sogar Einbuchtungen, sofern deren Krümmungsradius größer ist als der Krümmungsradius des Außenfräsers.

An die Wangenaußenkontur 10 schließt sich die Wangenseitenfläche 3 an, die radial nach innen bis annähernd an die Mantelfläche 16 des Zapfens, also eines Hublagers H oder eines Mittellagers ML heranreicht. Am radial inneren Ende der Wangenseitenfläche 3 schließt sich der meist gerundete Wangenübergang 11 an, der in eine kurze Mantelfläche 12, die Teil des Wangenübergangs 11 ist, übergeht.

Am axial äußeren Ende der Mantelfläche 16 des Zapfens schließt sich ein Unterstich 15 an, der an seinem von der Mantelfläche 16 abgewandten Ende einen Stirnseitigen Ölbund 14 übergeht, der die Lagerbreite bestimmt.

Zwischen dem stirnseitigen Ölbund 14 und dem Wangenübergang 2 kann ein zusätzlicher Absatz 13 angeordnet sein.

Bei diesen Bearbeitungsflächen wird in der Regel die Mantelfläche 16 des Zapfens meist ebenso wie die Umfangskontur 10 der Wange 4 mit Zapfenplatten gefräst. Der Unterstich 15 wird - meist zusammen mit dem angrenzenden Ölbund 14 - meist in einem Arbeitsgang durch eine separate Unterstichplatte hergestellt.

Die stirnseitige Wangenfläche 3 wird in der Regel mit einer separaten Wangenplatte hergestellt, wobei auch der Wangenübergang 11 mit der Mantelfläche 12 entsteht.

Für die Bearbeitung der Wangenseitenfläche 3 wird eine separate Wangenplatte verwendet, weil hier große Spanmengen abzunehmen sind und daher bei Erstellung der Wangenseitenfläche z. B. mit einer Zapfenplatte an dieser ein schneller Verschleiß auftreten würde.

An dem Grundkörper eines Fräsers können nun entweder nur Wangenplatten oder Wangenplatten zusammen mit Unterstichplatten angeordnet sein, wodurch z. B. die Bearbeitung der Mantelfläche 16 zusammen mit dem Unterstich 15 und dem Ölbund 14 möglich ist.

Ebenso können die Unterstichplatten auf einem separaten Fräser angeordnet sein.

Auch die Wangenplatten sind in der Regel auf separaten Fräsern, meist auf beiden Seiten deren Grundkörper in beiderseitigem Einsatz - angeordnet. Möglich ist jedoch auch die Anordnung dieser Wangenplatten im Randbereich eines Fräsergrundkörpers zusammen mit Zapfenplatten zur Bearbeitung von mantelflächen.

Um größere axiale Längen der Mantelfläche 16 etc. herstellen zu können, kann das Werkzeug bei der Herstellung in Z-Richtung verfahren werden und dabei eine spiralige Bahn auf der Mantelfläche fräsen.

## Patentansprüche

1. Verfahren zur spanenden Bearbeitung von Kurbelwellen aus Stahlwerkstoffen, nämlich aus Guß oder Stahl, mittels bestimmter Schneiden,
**dadurch gekennzeichnet, daß**
- die Schnittgeschwindigkeit mindestens 180 m/min, insbesondere mindestens 300 m/min beim Schruppen und mindestens 200 m/min, insbesondere mindestens 500 m/min. beim Schlichten beträgt,
- die spanende Bearbeitung eine Fräsbearbeitung mittels eines Außenfräsers (5) ist,
- die Schneiden (S) des Außenfräsers (5) eine positive Schneidengeometrie, insbesondere einen positiven Werkzeug-Normalspanwinkel (γₙ), aufweisen, und
- bei der Bearbeitung der Hublager (H₁, H₂) und /oder der Wangen (4) die Kurbelwelle (1) um die Symmetrieachse der Mittellager (ML) rotiert und der Außenfräser (5) mit der Rotation des Hublagers (H₁, H₂) wenigstens in X-Richtung so nachgeführt wird, daß die Schneiden des rotierenden Außenfräsers (5) die Mantelfläche des exzentrisch rotierenden Hublagers (H₁, H₂) bearbeiten.

2. Verfahren nach Anspruch 1,
**dadurch gekennzeichnet, daß**
der Außenfräser (5) scheibenförmig mit Schneiden (S) im Umfangsbereich ausgebildet ist.

3. Verfahren nach einem der vorhergehenden Ansprüche,
**dadurch gekennzeichnet, daß**
bei der spanenden Bearbeitung von Kurbelwellen auch die Wangenflächen (3) der Kurbelwelle (1) bearbeitet werden.

4. Verfahren nach Anspruch 3,
**dadurch gekennzeichnet, daß**
die Wangenflächen (3) und die angrenzende Mantelfläche eines Mittellagers (ML) bzw. eines Hublagers (H₁, H₂..) in einem Arbeitsgang bearbeitet werden.

5. Verfahren nach Anspruch 1,
**dadurch gekennzeichnet, daß**
bei der Bearbeitung der Hublager (H₁, H₂) die Kurbelwelle (1) um die Symmetrieachse der Mittellager (ML) rotiert und der Außenfräser (5) mit der Rotation des Hublagers (H₁, H₂) wenigstens in X- und Z-Richtung so nachgeführt wird, daß die Schneiden des rotierenden Außenfräsers (5) die Mantelfläche des Hublagers (H₁, H₂) bearbeiten.

6. Verfahren nach einem der vorhergehenden Ansprüche,
**dadurch gekennzeichnet, daß**
die Drehzahl des Werkzeuges, insbesondere des Außenfräsers (5), ein Mehrfaches der Drehzahl des Werkstückes, insbesondere der Kurbelwelle (1), beträgt.

7. Verfahren nach Anspruch 6,
**dadurch gekennzeichnet, daß**
die Drehzahl des Werkzeuges, insbesondere des Außenfräsers (5), mindestens das Fünffache, insbesondere mindestens das Zehnfache der Drehzahl des Werkstückes, insbesondere der Kurbelwelle (1), beträgt.

8. Verfahren nach einem der vorhergehenden Ansprüche,
**dadurch gekennzeichnet, daß**
die Drehzahl des Werkstückes, insbesondere der Kurbelwelle, 0-60 Umdrehungen/Minute, insbesondere 10-20 Umdrehungen/Minute beträgt.

## Claims

1. Method for machining crankshafts made of steel materials, namely of casting or steel, by means of particular cutting edges,
**characterized in that**,
- the cutting speed amounts to at least 180 m/min, in particular at least 300 m/min during roughing and at least 200 m/min, in particular at least 500 m/min during finishing,
- the machining is a milling machining by means of an external milling cutter (5),
- the cutting edges (S) of the external milling cutter (5) have a positive cutting edge geometry, in particular a positive tool orthogonal rake angle (γₙ), and
- during the machining of the pin bearings (H₁, H₂) and/or of the cheeks (4) the crankshaft (1) rotates about the axis of symmetry of the centre bearings (ML) and the external milling cutter (5) is tracked with the rotation of the pin bearing (H₁, H₂) at least in the X-direction such that the cutting edges of the rotating external milling cutter (5) machine the peripheral surface of the eccentrically rotating pin bearing (H₁, H₂).

2. Method according to claim 1,
**characterized in that**
the external milling cutter (5) is disk-shaped with cutting edges (S) located in the circumferential area.

3. Method according to any one of the preceding claims,
**characterized in that**
during the machining of crankshafts the cheek faces (3) of the crankshaft (1) are also machined.

4. Method according to claim 3,
**characterized in that**
the cheek faces (3) and the adjacent peripheral surface of a centre bearing (ML) or of a pin bearing (H₁, H₂ ...) are machined in one working operation.

5. Method according to claim 1,
**characterized in that**
during the machining of the pin bearings (H₁, H₂) the crankshaft (1) rotates about the axis of symmetry of the centre bearings (ML) and the external milling cutter (5) is tracked with the rotation of the pin bearing (H₁, H₂) at least in the X- and Z-direction such that the cutting edges of the rotating external milling cutter (5) machine the peripheral surface of the pin bearing (H₁, H₂).

6. Method according to any one of the preceding claims,
**characterized in that**
the rotational speed of the tool, in particular of the external milling cutter (5), amounts to a multiple of the rotational speed of the workpiece, in particular of the crankshaft (1).

7. Method according to claim 6,
**characterized in that**
the rotational speed of the tool, in particular of the external milling cutter (5), amounts to at least the fivefold, in particular at least the tenfold of the rotational speed of the workpiece, in particular of the crankshaft (1).

8. Method according to any one of the preceding claims,
**characterized in that**
the rotational speed of the tool, in particular of the crankshaft, amounts to 0 - 60 rotations per minute, in particular at least 10 - 20 rotations per minute.

## Revendications

1. Procédé pour l'usinage par enlèvement de copeaux de vilebrequins en matériau d'aciérie, en fonte ou acier, au moyen de certaines lames, **caractérisé en ce que**
- la vitesse de coupe s'élève au moins à 180 m/min en particulier au moins à 300 m/min pour le dégrossissage et au moins 200 m/min en particulier 500 m/min pour le finissage,
- l'usinage par enlèvement de copeaux est un usinage à la fraise au moyen d'une fraise à profiler (5),
- les lames (S) de la fraise à profiler (5) présentent une géométrie positive de lame en particulier un angle positif normal orthogonal de coupe de l'outil (√ₙ) et
- lors de l'usinage des paliers de levage (H₁, H₂) et des joues (4), le vilebrequin (1) tourne autour de l'axe de symétrie des paliers médians (ML) et la fraise à profiler (5) est amenée avec la rotation du palier de levage (H₁, H₂) au moins dans le sens des X et **en ce que** les lames de la fraise rotative à profiler (5) usinent la surface d'enveloppe du palier de levage (H₁, H₂) excentrique tournant.

2. Procédé selon la revendication 1, **caractérisé en ce que** la fraise à profiler (5) est réalisée dans la zone périphérique en forme de disque avec des lames (S).

3. Procédé selon l'une des revendications précédentes, **caractérisé en ce que** lors de l'usinage par enlèvement de copeaux de vilebrequins, les surfaces (3) des joues du vilebrequin (1) sont également usinées.

4. Procédé selon la revendication 3, **caractérisé en ce que** les surfaces de joues (3) et les surfaces d'enveloppe voisines d'un palier médian (ML) respectivement d'un palier de levage (H₁, H₂) sont usinées dans une opération de travail.

5. Procédé selon la revendication 1, **caractérisé en ce que** lors de l'usinage des paliers de levage (H₁, H₂), le vilebrequin (1) tourne autour de l'axe de symétrie des paliers médians (ML) et la fraise à profiler (5) est emmenée en rotation avec le palier de levage (H₁, H₂) au moins dans le sens des X et des Z, de sorte que les lames de la fraise rotative à profiler (5) usine la surface d'enveloppe du palier de levage (H₁, H₂).

6. Procédé selon l'une des revendications précédentes, **caractérisé en ce que** le nombre de tours de l'outil, en particulier de la fraise à profiler (5) s'élève à un multiple du nombre de tours de la pièce à usiner

7. Procédé selon l'une des revendications précédentes, **caractérisé en ce que** le nombre de tours de l'outil, en particulier de la fraise à profiler (5) s'élève au moins à cinq fois, en particulier au moins à dix fois le nombre de tours de la pièce à usiner en particulier du vilebrequin (1).

8. Procédé selon l'une des revendications précédentes, **caractérisé en ce que** le nombre de tours de l'outil, en particulier du vilebrequin, s'élève 0 - 60 rotations par minute, en particulier 10 - 20 rotations par minute.
